# EUROPÄISCHE PATENTSCHRIFT

(11) **EP 0 310 861 B1**
(45) Veröffentlichungstag und Bekanntmachung des Hinweises auf die Patenterteilung: **10.03.1993**
(21) Anmeldenummer: 88115455.3
(22) Anmeldetag: 21.09.1988
(51) Int. Cl.: G11B 15/24, G11B 15/44

(54) **Cassettenrecorder**
Cassette tape recorder
Enregistreur du type à cassette

(30) Priorität: 03.10.1987 DE 3733527
(43) Veröffentlichungstag der Anmeldung: 12.04.1989
(73) Patentinhaber: Blaupunkt-Werke GmbH, 31132 Hildesheim (DE)
(72) Erfinder: Birth, Gerhard, D-3200 Hildesheim (DE)
(74) Vertreter: Eilers, Norbert, Dipl.-Phys.

(56) Entgegenhaltungen:
- EP-A- 0 290 079
- DE-A- 3 001 769
- DE-A- 3 226 712
- DE-A- 3 235 495
- DE-A- 3 442 713

## Beschreibung

Die Erfindung betrifft einen Kassettenrecorder, insbesondere zum Betrieb in Kraftfahrzeugen für den Reverse-Betrieb mit je 2 Gummiandruckrollen und Capstanwellen gemäß dem Oberbegriff des Patentanspruchs 1.

Bei Kassettenrecordern dieser Gattung erfolgt der Antrieb des Magnetbandes der Kassette dadurch, daß - entsprechend der jeweils gewünschten Laufrichtung bzw. Abspielrichtung - eine der beiden Gummiandruckrollen gegen die zugehörige Capstanwelle gedrückt wird, wobei sich das Magnetband zwischen der Capstanwelle und der Gummiandruckrolle befindet. Die Andruckkraft für die Gummiandruckrolle ist dabei relativ groß bemessen, um einen sicheren Gleichlauf des Magnetbandes zu erzielen.

Wenn der Kassettenrecorder durch Abschalten der Betriebsspannung außer Betrieb genommen wird und sich die Capstanwelle und die Gummiandruckrolle nicht mehr drehen, kann die Andruckkraft der Gummiandruckrolle dazu führen, daß sich auf ihrer Oberfläche bleibende Verformungen einstellen. Diese Verformungen führen in der Abspielposition des wieder eingeschalteten Kassettenrecorders zu störenden Verzerrungen der Wiedergabe des auf dem Magnetband aufgenommenen Musikstückes oder dergleichen.

Es ist daher bei Kassettenrecordern schon bekannt, die beiden Gummiandruckrollen bei einem Reverselaufwerk von den Capstanwellen abzuheben, um die schädlichen Verformungen und die sich dadurch einstellenden Wiedergabeverzerrungen zu vermeiden. Diese neutrale Position, in welcher die beiden Gummiandruckrollen ohne Berührung mit den Capstanwellen sind, ist unter der Bezeichnung "Pinch-Roller-Release"-Stellung bekannt.

Aus der nicht vorveröffentlichten EPA 290 079 ist es bekannt, in Kassettenrecordern zum Betrieb in Kraftfahrzeugen die Andruckrollen über einen Schieber wechselseitig gegen Federkraft von zugeordneten Tonwellen abzuheben. Dabei wird der Schieber in der jeweiligen Abhebestellung elektromagnetisch festgehalten. Zwar läßt sich hierbei durch einen Kurvenhebel bei festgehaltener Schiebestellung auch die zweite Andruckrolle von der Tonwelle abheben, jedoch ist es mit diesem vorbekannten Kassettenrecorder nicht möglich, nach dem Abschalten der Betriebsspannung die Gefahr der Verformung der Andruckrollen zu vermeiden.

Um die genannte neutrale Stellung nach dem Abschalten der Betriebsspannung zu erzielen, hat man gemaß DE-A-3001 769 den Weg beschritten, den gesamten Kopfträger des Kassettenlaufwerks zusammen mit den Gummiandruckrollen zu verschieben
Weg, damit beide Gummiandruckrollen von den ortsfesten Capstanwellen abgehoben sind. Auf diese Weise lassen sich also die schädlichen Verformungen der Gummiandruckrollen und die damit verbundenen Wiedergabeverzerrungen vermeiden, allerdings erfordert diese bekannte Lösung einen beträchtlichen Aufwand, und zwar sowohl im Hinblick auf die Kosten, als auch im Hinblick auf den Platzbedarf innerhalb des Cassettenrecorders. Für die Bewegung des gesamten Kopfträgers zusammen mit den beiden Gummiandruckrollen wird nämlich ein Servo-Antrieb benötigt, der zusätzlich zu den weiteren Bauteilen des kompletten Cassettenrecorders vorgesehen und angeordnet werden muß. Neben dem erhöhten Platzbedarf ist auch noch zu berücksichtigen, daß der benötigte Servo-Antrieb eine weitere mögliche Fehlerquelle bildet, denn je mehr Einzelteile der Cassettenrecorder enthält, um so größer ist die Wahrscheinlichkeit einer Reparatur.

Insbesondere bei Cassettenrecordern für Kraftfahrzeuge besteht aber die Forderung nach einem möglichst geringen Platzbedarf und nach geringerer Reparaturanfälligkeit, zumal der Cassettenrecorder häufig mit dem Autoradio kombiniert ist.

Zwar läßt sich die angesprochene Problematik möglicher Verformungen der Gummiandruckrollen nach dem Abschalten der Betriebsspannung sowie die erwähnten Wiedergabeverzerrungen vermeiden, wenn man dafür sorgt, daß die Cassette nach dem Abschalten der Betriebsspannung automatisch ausgeworfen wird, jedoch erfordert ein solches automatisches Auswerfen ebenfalls zusätzliche Maßnahmen. Außerdem ist in vielen Fällen ein solches Auswerfen von dem Benutzer nicht gewünscht, und die Erfindung geht daher von einem Cassettenrecorder aus, bei welchem die Cassette nach dem Abschalten der Betriebsspannung nicht ausgeworfen wird. Im anderen Fall muß nämlich von dem Benutzer nach dem erneuten Einschalten des Cassettenrecorders die betreffende Cassette jeweils wieder eingeschoben werden, was als lästig empfunden wird.

Der Erfindung liegt die Aufgabe zugrunde, einen Cassettenrecorder zu schaffen, bei dem nach dem Abschalten der Betriebsspannung die neutrale Position ("Pinch-Roller-Release") mit geringen Kosten und bei geringem Raumbedarf für die zugehörige Antriebsmechanik ermöglicht wird.

Dieses Ziel erreicht die Erfindung bei dem im Oberbegriff des Patentanspruchs 1 vorausgesetzten Cassettenrecorder durch die im kennzeichnenden Teil angegebenen Merkmale.

Bei der Erfindung kann die die Gummiandruckrollen schonende neutrale Position ohne besonderen Servo-Antrieb erreicht werden, wodurch sich ein wirtschaftlicher Kostenvorteil ergibt. Für die Erzielung der neutralen Position wird nämlich das schon vorhandene Reverseschaltorgan ausgenutzt, welches von dem ebenfalls schon vorhandenen Schaltelement für die Betätigung des Reverseschaltorgangs entsprechend beeinflußt wird. Es können also die ohnehin schon vorgesehenen Teile mit verwendet werden, so daß kein besonderer zusätzlicher mechanischer Aufwand erforderlich ist. Daraus ergibt sich als weiterer Vorteil, daß der neue Cassettenrecorder mit geringem Raumbedarf realisierbar ist.

Bei den bekannten Cassettenrecordern ist zwar auch schon vorgesehen, daß das Schaltelement auf das Reverseschaltorgan einwirkt, allerdings erfolgt dies ausschließlich zu dem Zweck, eine der beiden gewünschten Abspielpositionen einzunehmen, um also jeweils eine Gummiandruckrolle gegen die zugeordnete Capstanwelle zu drücken. Bei der Erfindung wird nun in neuartiger Weise die Einwirkung des Schaltelements auf das Reverseschaltorgan dazu ausgenutzt, dieses in eine solche Stellung zu bringen, in welcher die eingangs erwähnte neutrale Position eingenommen wird, bei der die beiden Gummiandruckrollen von den Capstanwellen abgehoben sind.

In einer zweckmäßigen Ausgestaltung der Erfindung läßt sich dies in vorteilhafter Weise dadurch erreichen, daß das Schaltelement als ein Schaltrad ausgebildet und durch Ansteuerung mittels eines Impulsmagneten nacheinander in mehrere Raststellungen einrastbar ist.

Anstelle von zwei Raststellungen werden in zweckmäßiger Ausgestaltung der Erfindung dann vier Raststellungen vorgesehen, also zwei weitere zusätzliche Raststellungen, die beide der neutralen Position entsprechen. Die Ansteuerung des Schaltrades erfolgt in an sich bekannter Weise mittels eines Impulsmagneten, durch welchen das Schaltrad zeitlich nacheinander in die unterschiedlichen Raststellungen bringbar ist.

Das Reverseschaltorgan ist gemäß einer anderen vorteilhaften Ausgestaltung der Erfindung in an sich bekannter Weise als Schaltwippe mit zwei Schaltarmen ausgebildet, von denen jeder Schaltarm auf die Gummiandruckrollenhebel der Gummirollen einwirkt. Im Reversebetrieb wird durch die Schaltwippe jeweils die gewünschte Gummiandruckrolle in Anlage mit der zugeordneten Capstanwelle gebracht, und nach dem Abschalten der Betriebsspannung nehmen die beiden Schaltarme bei der Erfindung die gewünschte Position ein, in der beide Gummiandruckrollen von den Capstanwellen abgehoben sind.

Weitere vorteilhafte Ausgestaltungen der Erfindung ergeben sich aus den Ansprüchen, der Beschreibung und der Zeichnung.

Nachfolgend wird die Erfindung zum besseren Verständnis anhand des in der Zeichnung dargestellten Ausführungsbeispiels näher erläutert. Es zeigen:
- Fig. 1: ein Prinzipschaltbild eines Cassettenlaufwerks mit Reversebetrieb in einer Abspielposition,
- Fig. 2: ein Prinzipschaltbild gemäß Fig. 1, jedoch in der neutralen Position der Gummiandruckrollen,
- Fig. 3 und 4: jeweils unterschiedliche Raststellungen eines Schaltrades für eine Abspielposition (Fig. 3) und für die neutrale Position (Fig. 4).

Das in der Zeichnung als Ganzes mit der Bezugsziffer 10 dargestellte Cassettenlaufwerk umfaßt zwei Gummiandruckrollen 12 und 14, die auf Gummiandruckrollenhebel 16 und 18 angeordnet sind.

Jeder Gummiandruckrollenhebel 16, 18 ist einerseits an einem Ende ortsfest mit dem Chassis verbunden, und andererseits mit der Kraft jeweils einer Feder 20, 22 beaufschlagt. Durch diese Federkräfte können die Gummiandruckrollen 12, 14 gegen zugehörige Capstanwellen 24 und 26 gedrückt werden, wenn die betreffenden Gummiandruckrollenhebel 16, 18 freigegeben sind.

Das Cassettenlaufwerk 10 umfaßt ferner eine als Reverseschaltorgan ausgebildete Schaltwippe 28 mit zwei Schaltarmen 30 und 32. Der eine Schaltarm 32 ist über einen Verbindungsträger 44 mit einem als Schaltrad 40 ausgebildeten Schaltelement verbunden, wobei das entsprechende Ende des Verbindungsträgers 44 exzentrisch mit dem Schaltrad 40 in Verbindung steht.

Das Schaltrad 40 besitzt vier Rastnasen 42 für vier Raststellungen. Durch einen den Zuganker eines Impulsmagneten 34 bildenden Rasthebel 36 können die genannten Raststellungen beibehalten oder freigegeben werden.

Wenn der Impulsmagnet 34 durch einen Impuls angesteuert und damit der Rasthebel 36 von dem Impulsmagneten 34 entgegen der Kraft einer Feder 38 angezogen wird, wird die Rastnase 42 durch den Rasthebel 36 freigegeben, und daß Schaltrad 40 bewegt sich in Richtung des Pfeiles A, bis die folgende Rastnase 42 wieder zum Anschlag mit dem Rasthebel 36 gelangt. Das Schaltrad 40 ist ausschließlich in Drehrichtung gemäß dem Pfeil A bewegbar und wird durch einen hier nicht näher dargestellten Antrieb in Drehung versetzt, sobald eine Raststellung freigegeben ist.

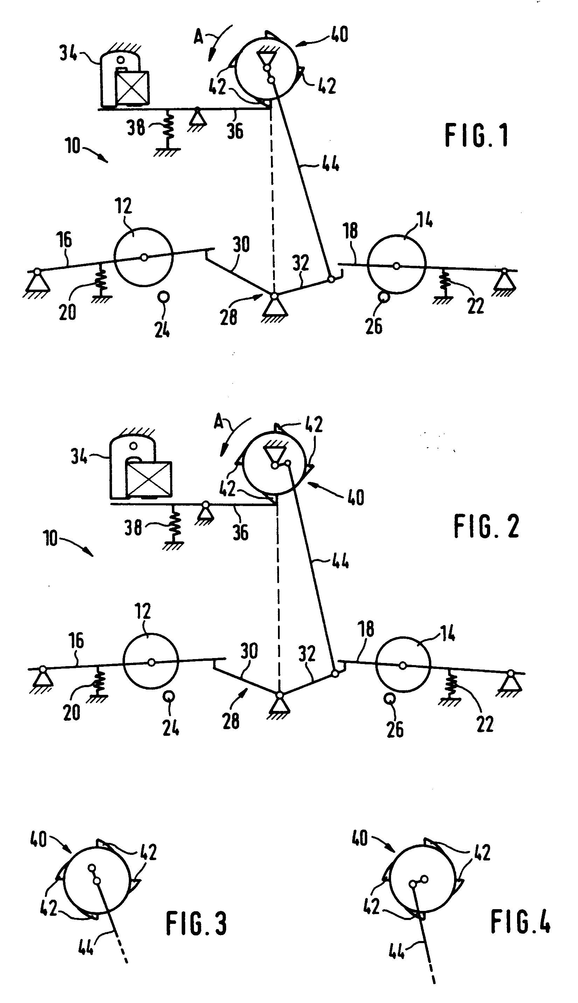

In Fig. 1 ist eine Abspielposition des Cassettenlaufwerks 10 gezeigt, in welcher die rechte Gummiandruckrolle 14 an der zugeordneten Capstanwelle 26 anliegt, während der Schaltarm 30 in der gezeigten Stellung des Schaltrades 40 den Gummiandruckrollenhebel 16, soweit nach oben bewegt, daß die andere Gummiandruckrolle 12 von der zugeordneten Capstanwelle 24 abgehoben ist.

Bei dem Cassettenlaufwerk 10 wird für die Betriebsspannung ein Dauerplusanschluß vorgesehen. Nach dem Abschalten der Betriebsspannung wird nun - ausgehend von Fig. 1 - ein elektrischer Impuls auf den Impulsmagneten 34 gegeben, wodurch das Schaltrad 40 die in Fig. 2 gezeigte Position einnimmt, in welcher beide Gummiandruckrollen 12, 14 von den Capstanwellen 24 und 26 abgehoben sind. Damit ist die gewünschte neutrale Position erreicht.

Für eine normale Reverseschaltung - Umschaltung von der einen in die andere Abspielrichtung - werden dem Impulsmagneten 34 zwei Impulse zugeführt, wodurch dann die gewünschte Spielstellung erreicht wird. Wenn beispielsweise in der in Fig. 1 gezeigten Position dem Impulsmagneten 34 zwei Impulse zugeführt werden, nimmt das Schaltrad die in Fig. 3 gezeigte Position ein. Dann befindet sich die Gummiandruckrolle 12 in Anlage mit der Capstanwelle 24 (in Fig. 3 nicht näher dargestellt).

Fig. 4 zeigt eine weitere Position des Schaltrades 40, welche der schon in Fig. 2 dargestellten neutralen Position entspricht, in der die beiden Gummiandruckrollen 12 und 14 von den Capstanwellen 24 und 26 abgehoben sind. Es ist ohne weiteres ersichtlicht, daß die in Fig. 4 dargestellte Raststellung - ausgehend von der Spielstellung in Fig. 3 - wiederum dadurch erreicht wird, daß nach dem Abschalten der Betriebsspannung dem Impulsmagneten 34 ein Impuls zugeführt wird.

Nach dem Wiedereinschalten der Betriebsspannung müssen dem Impulsmagneten 34 drei Impulse zugeführt werden, damit die zuletzt gehörte Abspielrichtung des Magnetbandes des Cassettenrecorders wiedergegeben werden kann. Wenn man beispielsweise von der neutralen Position gemäß Fig. 2 ausgeht, kann man erkennen, daß nach drei Raststellungen des Schaltrades 40 in Richtung des Pfeiles A wieder die in Fig. 1 gezeigte Abspielposition eingenommen wird.

Das soweit beschriebene Ausführungsbeispiel verdeutlicht den Vorteil der Erfindung, bei Cassettenlaufwerken ohne Servo-Antrieb für den Kopfträger die erwünschte neutrale Stellung erzielen zu können, in der die beiden Gummiandruckrollen 12 und 14 von den Capstanwellen 24 und 26 abgehoben sind. Da bei den bekannten Cassettenlaufwerken ohnehin schon ein Schaltrad 40 und eine Schaltwippe 28 vorgesehen sind, ist der zusätzliche Aufwand bei der Erfindung - vier Raststellungen für das Schaltrad 20 anstelle von zwei Raststellungen - vernachlässigbar gering. Die Erfindung eignet sich daher auch in vorteilhafter Weise dazu, die Möglichkeit der neutralen Position bei bekannten Cassettenlaufwerken durch nur geringfügigen zusätzlichen Aufwand zu schaffen.

## Patentansprüche

1. Kassettenrecorder, insbesondere zum Betrieb in Kraftfahrzeugen, für den Reversebetrieb, mit je zwei Andruckrollen (12, 14) und Capstanwellen (24, 26), ferner mit einem Reverseschaltorgan (28), welches durch ein Raststellungen aufweisendes Schaltelement (40) betätigbar ist und welches auf Andruckrollenhebel einwirkt, um entsprechend der betätigten Laufrichtung der Kassette jeweils eine Andruckrolle von der zugehörigen Capstanwelle entgegen einer Federkraft (20, 22) abzuheben, während der andere Andruckrollenhebel gleichzeitig freigegeben wird, so daß dessen Andruckrolle gleichzeitig an der anderen Capstanwelle anliegt,
dadurch gekennzeichnet,
daß das Schaltelement zyklisch durchlaufbare Raststellungen aufweist, wobei den beiden Laufrichtungen der Kassette zugeordnete Raststellungen durch neutrale Raststellungen getrennt sind, daß nach dem Abschalten der Betriebsspannung des Kassettenrecorders das
Schaltelement (40) aus einer einer Laufrichtung zugeordneten Raststellung in eine folgende neutrale Raststellung bringbar ist, in der das Reverseschaltorgan so betätigt wird, daß beide Andruckrollen (12, 14) von den zugehörigen Capstanwellen (24, 26) abgehoben sind.

2. Kassettenrecorder nach Anspruch 1,
dadurch gekennzeichnet,
daß das Schaltelement (40) als Schaltrad ausgebildet und durch Ansteuerung mittels eines Impulsmagneten (34) nacheinander in mehrere Raststellungen einrastbar ist.

3. Kassettenrecorder nach Anspruch 2,
dadurch gekennzeichnet,
daß das Schaltrad (40) vier Raststellungen besitzt, von denen je eine der jeweils einen Laufrichtung in den Antriebspositionen und von denen die beiden anderen der neutralen Position des Reverseschaltorgans (28) zugeordnet sind.

4. Kassettenrecorder nach Anspruch 3,
dadurch gekennzeichnet,
daß das Schaltrad (4) nur in einer Drehrichtung (A) bewegbar ist.

5. Cassettenrecorder nach einem der vorhergehenden Ansprüche 2 - 4, dadurch gekennzeichnet, daß an dem Schaltrad (40) ein Verbindungsträger (44) mit seinem einen Ende in exzentrischer Lage befestigt ist, dessen anderes Ende mit dem Reverseschaltorgan (28) verbunden ist.

6. Cassettenrecorder nach Anspruch 5, dadurch gekennzeichnet, daß das Reverseschaltorgan als Schaltwippe (28) mit zwei Schaltarmen (30, 32) ausgebildet ist, die auf die Andruckrollenhebel (16, 18) einwirken, und daß der eine Schaltarm (32) mit dem Verbindungsträger (44) verbunden ist.

## Claims

1. Cassette recorder, in particular for operation in motor vehicles, for reverse mode, having two pinch rollers (12, 14) and two capstans (24, 26), further having a reverse switching member (28) which can be actuated by a switching element (40) having engagement positions and which acts on pinch roller levers in order in each case, corresponding to the actuated running direction of the cassette, to lift one pinch roller off the associated capstan against a spring force (20, 22), whereas the other pinch roller lever is at the same time released, so that the pinch roller of the latter at the same time bears against the other capstan, characterised in that the switching element has engagement positions which can be passed through cyclically, the engagement positions assigned to the two running directions of the cassette being separated by neutral engagement positions, in that after switching off of the operating voltage of the cassette recorder the switching element (40) can be brought out of an engagement position assigned to one running direction into a following neutral engagement position, in which the reverse switching member is actuated in such a way that both pinch rollers (12, 14) are lifted off the associated capstans (24, 26).

2. Cassette recorder according to Claim 1, characterised in that the switching element (40) is designed as a switching wheel and can be engaged successively in a plurality of engagement positions by activation by means of a pulse magnet (34).

3. Cassette recorder according to Claim 2, characterised in that the switching wheel (40) has four engagement positions, of which one in each case is assigned respectively to one running direction in the drive positions and of which the other two are assigned to the neutral position of the reverse switching member (28).

4. Cassette recorder according to Claim 3, characterised in that the switching wheel (4) is movable only in one direction of rotation (A).

5. Cassette recorder according to one of the preceding Claims 2-4, characterised in that a connecting bearer (44) is fastened by its one end in an eccentric position to the switching wheel (40), the other end of which bearer is connected to the reverse switching member (28).

6. Cassette recorder according to Claim 5, characterised in that the reverse switching member is designed as a switching rocker (28) with two switching arms (30, 32) which act on the pinch roller levers (16, 18), and in that the one switching arm (32) is connected to the connecting bearer (44).

## Revendications

1. Enregistreur à cassette, notamment destiné à des véhicules automobiles, avec fonctionnement réversible, chaque fois deux galets applicateur (12, 14) et des axes de cabestan (24, 26) ainsi qu'un organe de commutation d'inversion (28) qui peut être actionné par un élément de commutation (40) à position d'encliquetage et qui agit sur le levier de rouleau applicateur pour qu'en fonction de la direction de défilement commandée de la cassette, chaque fois un galet applicateur est dégagé de l'axe de cabestan correspondant, contre une force de ressort (20, 22) pendant que l'autre levier de galet applicateur est libéré simultanément, pour que son galet applicateur vienne en même temps contre l'autre axe de cabestan,
enregistreur caractérisé en ce que l'élément de commutation comporte des positions d'encliquetage parcourues de manière cyclique, et aux deux directions de déplacement de la cassette sont associés des moyens d'encliquetage par des positions d'encliquetage neutres et après la coupure de la tension d'alimentation de l'enregistreur à cassette, l'élément de commutation (40) est conduit d'une position de repos associée à la direction de défilement, dans une position neutre correspondante, pour laquelle l'organe de commutation réversible est actionné et en ce que les deux galets applicateurs (12, 14) sont soulevés de l'axe de cabestan (24, 26) correspondant.

2. Enregistreur à cassette selon la revendication 1, caractérisé en ce que l'élément de commutation (40) est en forme de roue de commutation et la commande à l'aide d'un aimant impulsionnel (34) permet un accrochage dans plusieurs positions d'encliquetage successives.

3. Enregistreur à cassette selon la revendication 2, caractérisé en ce que la roue de commutation (40) possède quatre positions d'encliquetage dont chaque fois une est associée à une direction de déplacement respective entre les positions d'entraînement et dont les deux autres sont associées à la position neutre de l'organe d'inversion (28).

4. Enregistreur à cassette selon la revendication 3, caractérisé en ce que la roue de commutation (4) ne peut tourner que dans une sens (A).

5. Enregistreur à cassette selon l'une des revendications précédentes 2 - 4, caractérisé par un support de liaison (44) sur la roue de commutation (40), en étant fixé de manière excentrée par une extrémité, l'autre extrémité étant reliée à l'organe de commutation d'inversion (28).

6. Enregistreur à cassette selon la revendication 5, caractérisé en ce que l'organe de commutation d'inversion est un balai de commutation (28) avec deux bras de commutation (30, 32) agissant sur les leviers de rouleau applicateur (16, 18) et en ce que l'un des bras de commutation (32) est relié au support de liaison (44).
